(19) Europäisches Patentamt
European Patent Office
Office européen des brevets

(11) **EP 3 745 309 B1**

(12) **EUROPEAN PATENT SPECIFICATION**

(45) Date of publication and mention
of the grant of the patent:
**29.01.2025 Bulletin 2025/05**

(21) Application number: **19176670.8**

(22) Date of filing: **27.05.2019**

(51) International Patent Classification (IPC):
**G06N 3/0475** (2023.01)     **G06N 3/094** (2023.01)
**G06N 3/048** (2023.01)

(52) Cooperative Patent Classification (CPC):
**G06N 3/0475; G06N 3/094;** G06N 3/048

(54) **TRAINING A GENERATIVE ADVERSARIAL NETWORK**

TRAINIEREN EINES GENERATIVEN KONFLIKTÄREN NETZWERKS

APPRENTISSAGE D'UN RÉSEAU ANTAGONISTE GÉNÉRATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.12.2020 Bulletin 2020/49**

(73) Proprietor: **Robert Bosch GmbH
70442 Stuttgart (DE)**

(72) Inventor: **Munoz Delgado, Andres Mauricio
71263 Weil Der Stadt (DE)**

(56) References cited:
**US-A1- 2019 114 748**

• **HAO TANG ET AL: "Attention-Guided Generative
Adversarial Networks for Unsupervised Image-
to-Image Translation", ARXIV.ORG, CORNELL
UNIVERSITY LIBRARY, 201 OLIN LIBRARY
CORNELL UNIVERSITY ITHACA, NY 14853, 28
March 2019 (2019-03-28), XP081162988**

• **XI CHEN ET AL: "InfoGAN: Interpretable
Representation Learning by Information
Maximizing Generative Adversarial Nets",
PROCEEDINGS OF THE 30TH INTERNATIONAL
CONFERENCE ON NEURAL INFORMATION
PROCESSING SYSTEMS (NIPS 2016), 5
December 2016 (2016-12-05), pages 2180 - 2188,
XP055542337, Retrieved from the Internet
<URL:https://papers.nips.
cc/paper/6399-infogan-interpretable-representa
tion-learning-by-information-maximizing-genera
tive-adversarial-nets.pdf> [retrieved on
20190115]**

• **HAO TANG ET AL: "Multi-Channel Attention
Selection GAN with Cascaded Semantic
Guidance for Cross-View Image Translation",
ARXIV.ORG, CORNELL UNIVERSITY LIBRARY,
201 OLIN LIBRARY CORNELL UNIVERSITY
ITHACA, NY 14853, 15 April 2019 (2019-04-15),
XP081169172**

## Description

### FIELD OF THE INVENTION

The invention relates to a training system and computer-implemented training method for training a generative adversarial network. The invention further relates to a data synthesis system and computer-implemented data synthesis method for synthesizing data using a generative part of a trained generative adversarial network. The invention further relates to a computer-readable medium comprising data of the trained generative adversarial network, and to a computer-readable medium comprising data representing instructions arranged to cause a processor system to perform at least one of the computer-implemented methods.

### PRIOR ART

HAO TANG ET AL: "Attention-Guided Generative Adversarial Networks for Unsupervised Image-to-Image Translation", ARXIV.ORG, CORNELL UNIVERSITY LIBRARY, 201 OLIN LIBRARY CORNELL UNIVERSITY ITHACA, NY, 28.03.2019 discloses an Attention-Guided Generative Adversarial Network (AGGAN), which can detect the most discriminative semantic object and minimize changes of unwanted part for semantic manipulation problems without using extra data and models.

Xi Chen ET AL: "InfoGAN: Interpretable Representation Learning by Information Maximizing Generative Adversarial Nets", Proceedings of the 30th International Conference on Neural Information Processing Systems (NIPS 2016), 5 December 2016 (2016-12-05), pages 2180-2188 discloses an information-theoretic extension to the Generative Adversarial Network that is able to learn disentangled representations in a completely unsupervised manner.

### BACKGROUND OF THE INVENTION

Generative Adversarial Networks (GANs) have been introduced by Ian Goodfellow et. al. in 2014 [1]. In their paper, a framework is proposed for estimating generative models via adversarial networks, in which two models are simultaneously trained: a generative model G that captures a data distribution, and a discriminative model D that estimates the probability that an input instance is obtained from the training data (input is 'real') rather than from the generative model G (input is 'fake').

Recent research has shown that the generative models of such trained generative adversarial networks are capable of synthesizing naturally looking images at high resolution and at sufficient quality to fool even human observers, in particular when using deep generative models such as deep convolutional neural networks.

There are also many other real-world applications of trained GANs, and specifically of the generative models of trained GANs, ranging from anomaly detection, synthetic data generation for discriminative model training, to so-called 'explainability' tools for datasets and models. For example, in autonomous driving, various types of sensor data may be fused to establish a 360-degree view around a vehicle. In case the field of view of different types of sensors is different, a generative model may be trained and used to synthesize missing sensor data outside of the field of view of a sensor based on the sensor data of another sensor.

Another example in the field of autonomous driving is that trained GANs may be used to generate 'edge case' scenarios for autonomous driving, e.g., synthetic images representing near collisions, which may be used to test and verify the performance of autonomous driving algorithms and systems in such scenarios.

In the following, the generative model is also referred to as generative part of the GAN or simply as 'generator', and the discriminative model is also referred to as discriminative part of the GAN or simply as 'discriminator'.

The training of a GAN typically involves the following. The generative part G may be configured to generate synthesized output instances from noisy samples drawn from a latent space. The discriminative part D may be trained to discriminate between input instances originating from the generative part G and the training data. The generative part G may be trained to generate synthesized output instances from noisy samples which maximize a discrimination error when the discriminative part D is applied to the synthesized output instances. Such training of the discriminative part D and the generative part G may be iterative, wherein in each iteration, weights of the discriminative part D and the generative part G may be updated, for example by computing gradients through backpropagation.

The benefits of GANs may come at a cost. Namely, GANs are hard to train, as they comprise not one but two main components that may work adversarially in a zero-sum game and may be trained to find a Nash equilibrium. This may conceptually already be a difficult task. However, from a practical perspective, there are several difficult and often unsolved problems to contend with, including mode collapse, high variance gradients, training instability, vanishing generator gradients, etc. While some problems are being addressed, there is currently no consensus on how to train GANs in an efficient manner, and even less so, how to understand their development throughout the training process.

The latter point is crucial in the context of explainable Artificial Intelligence (AI). Namely, when deploying trained models in real-life applications, the output of the trained model should be explainable, e.g., to ensure trust in the trained model. Such explainability is particularly crucial for safety-critical applications, such as autonomous driving, and increasingly subject to regulation by authorities.

By definition, an explainable model is also predictable. However, in the context of GAN training, the training process itself is often mysterious, as generator and discriminator gradients are not only functions of the current model state or inputs from the training data, but of each other. This makes it very difficult to interpret any apparent pattern in the learning history of these components. Additionally, gradient curves may say little about the quality of synthetic output of the generative model.

**References**

[1] Ian J. Goodfellow et al. "Generative Adversarial Networks" in NIPS 2014, pp. 2672-2680, https://arxiv.org/abs/1406.2661

**SUMMARY OF THE INVENTION**

It may be desirable to be able to improve the training of a generative adversarial network, for example to be able to obtain information from the training which supports the explainability of the trained generative adversarial network.

The invention is defined by the independent claims. Preferred embodiments are defined by the dependent claims.

The above measures provide a training of a generative adversarial network which builds upon known training techniques, e.g., as described in [1] and the background section of this specification, in which the generative part and the discriminative part of a GAN are jointly trained such that the generative part learns from the gradient of the discriminative part. Essentially, the discriminative part may classify an input instance to be either real (originating from the training data) or fake (synthesized output originating from the generative part), and the generative part may learn from this classification so as to better 'fool' the discriminative part in the future, e.g., to maximize a discriminative error of the discriminative part.

Disadvantageously, known training techniques for the generative part do not use any insights or details about what specific criteria the discriminative part uses to arrive at its classification of a respective input instance. This can make training of the generative part slow, and may lead to problems such as the discriminative part outpacing the generative part at the start of the training process.

The above measures provide explanatory information to the generative part which identifies on which basis the discriminative part arrives at its classification. This explanatory information is provided in the form of an attention mask which identifies parts of a respective input instance which contribute to the classification of the respective input instance by the discriminative part, and can be understood as a mask indicating root causes of the classification by the discriminative part. The attention mask may be generated by the discriminative part as a function of a state of the discriminative part.

Such attention masks are by themselves known, and are also referred to as 'saliency maps' in case the input instances are images (see also section 2 of reference [2], cited below under 'Further references') but may also take any other suitable form.

Such an attention mask may represent a more specific feedback cue than the softmax score which is typically provided by the discriminative part and used for the training of the generative part. Namely, a softmax score alone can lead to the generative part entirely adapting its synthesized output in order to decrease the discriminative part's confidence that the synthesized output is fake. While such 'disruptive' changes may be desirable in the initial phases of training, it may be desirable to use a more insightful analysis to control the way the generative part synthesizes output instances as the training of generative part progresses.

The above measures provide and use the attention mask as a means of communicating this fine grain information. Accordingly, the generative part may generate new synthesized output instances as a function of not only of how the discriminative part reacts to fake input instances, but also of where the discriminative part focuses to arrive at its classification, e.g., on which part of an input instance.

The above measures may thereby establish an explainable training process, as the attention mask indicates on which part(s) the discriminative part focuses during each training step, and thereby on which part(s) the generative part is likely to focus on during a training step in order to better fool the discriminative part. Moreover, the speed and robustness of the training may be improved when using the attention mask, e.g., compared to a training using only a softmax score.

Specifically, the training of the GAN may comprise an outer iterative loop as described in the background section. The discriminative part of the GAN may be modified with respect to known discriminative parts to output an attention mask identifying parts of a respective input instance which contribute to the classification of the respective input instance by the discriminative part. Such an attention mask may take various forms depending on the type of input instance. For example, in case the GAN is trained to generate images, the attention mask may represent an image overlay highlighting parts of the image which contribute to the classification.

The generative part of the GAN may be modified with respect to known generative parts to receive the attention mask as input and to generate the synthesized output instances not only as a function of noisy samples drawn from a latent space (also referred to as a 'latent vector' or simply as 'sampled noise', and indicated by 'z'), but also as a function of the content of the attention mask.

In addition, an inner loop is established in the iterative training in which parameters of the generative part are trained, e.g., the model parameters of the generative model. The training is based on a loss function, which may be based on a known loss function by which the training promotes the generative part to generate synthesized output which 'fools' the discriminative part. This loss function may be modified to additionally include a mutual information term. The mutual information term may express the mutual information between a current attention mask of the discriminative part and the changes in a current synthesized output instance which are brought about by the use of the current attention mask compared to a previous attention mask. More specifically, in the inner iterative loop, the current attention mask may be obtained from the discriminative part by classification of a current synthetic output. The latter may be an output instance of the generative part, and may be generated from a latent vector z and a previously computed attention mask. If no mask has been previously computed, e.g., at a start of the iteration, a default mask may be used. In the inner iterative loop, the mutual information term may be maximized as part of minimizing the loss function. Accordingly, when minimizing the loss function by optimization or brute force search, a mutual information term having a higher value is favoured, other things being equal. The inner iterative loop may thus seek to maximize mutual information between the attention mask produced by the discriminative part, and the proposed changes by the generative part. Thereby, the inner iterative loop may train the generative part such that, that for a given iteration, the changes proposed by the generative part have a high mutual information with the attention mask produced by the discriminative part. Essentially, the generative part may determine which part(s) of an input instance contribute to the classification by the discriminative part, and attempt to 'fool it' there.

Optionally, the processor subsystem is configured to hold the noisy samples which are used as input to the generative part constant in the inner iterative loop of the iterative training. The latent vector (noisy samples z) may be kept constant in the inner iterative loop to account for the fact that the attention mask is generated as a function of the latent vector and thus only applies to the particular latent vector. It is noted that in the overall the training of the generative adversarial network, the inner iterative loop may then be executed several times, e.g., as part of an outer iterative loop, each time using a different sampled latent vector.

Optionally, the processor subsystem is configured to use an initial attention mask as the previous attention mask at a start of the inner iterative loop, wherein the initial attention mask identifies all parts of a respective input instance equally. For example, an attention mask consisting of all ones ('1') may be used as an initial attention mask, where the value '1' represents maximum attention. Thereby, the attention mask may indicate attention by the discriminative part which is distributed uniformly across the entire input instance, e.g., labelling each part of the input instance having attracted equal attention by the discriminative part. Thereby, in an initialization of the inner iterative loop, it may be avoided that the generative part is biased to attempt to fool the discriminative part in any specific part of the input instance, but rather still considers all parts equally. It is noted that when using the generative part of the trained GAN to synthesize data for real-world applications, a same type of initial attention mask may be used as input to the generative part, for example an attention mask consisting of all ones ('1').

Optionally, the mutual information term is an approximation of the true mutual information between the current attention mask (s) and the changes in the synthesized output instances. Optionally, the mutual information term is lower bounded by Variational Information Maximization. For example, the mutual information between the current attention mask and the changes in the synthesized output instances may be approximated in a same or similar manner as described for the mutual information between noise variables and observations in [3].

The training data comprises training images, the generative part is configured to generate synthesized output images, and the discriminative part is configured to discriminate between input images originating from the generative part and the training data. It is noted that the GAN may also be configured and trained to be used with any other suitable data type, including but not limited to text, structured data such as graphs, and audio. In the specific example of audio, the term 'part' of an input instance may refer to, e.g., a spectral (frequency) part for a given time window. In some embodiments, the GAN may be configured and trained to be used with non-image data, such as measurement data obtained from non-image sensors, which may be represented in a spatial format, such as image data.

Optionally, the discriminative part is configured to generate the attention mask as a spatial overlay to the synthesized output image which is used as input to the discriminative part. For example, the attention mask may be an image overlay highlighting parts of the image which contribute to the classification.

Optionally, the training system further comprises an output interface configured to output logging information which at least in part characterizes the training of the generative adversarial network. Optionally, the processor subsystem is configured to output one or more attention masks generated in the inner iterative loop of the training as, or as part of, the logging information. By outputting the attention mask(s), logging information may be obtained which may be used to support the explainability of the trained generative adversarial network. Such logging information may be stored in a persistent manner, e.g., for compliance with regulatory restrictions or to enable the training process to be 'audited'.

Optionally, the processor subsystem is configured to generate the logging information as metadata to the generative model data defining the trained generative adversarial model. The attention mask(s) may thereby be stored in a manner in which they are associated with the trained generative adversarial model.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

## Further references

Julius Adebayo et al. "Sanity Checks for Saliency Maps , https://arxiv.org/abs/1810.03292
Xi Chen et al. "InfoGAN: Interpretable Representation Learning by Information Maximizing Generative Adversarial Nets", https://arxiv.org/abs/1606.03657

## BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a training system for training a generative adversarial network which comprises an output interface configured to output logging information characterizing the training of generative adversarial network;
Fig. 2 shows a flowchart illustrating a part of the training of the generative part of the generative adversarial network;
Fig. 3 provides an alternate illustration of the training of the generative part of the generative adversarial network;
Fig. 4 shows a data synthesis system for synthesizing data using a generative part of a trained generative adversarial network;
Fig. 5 shows the data synthesis system being used in an autonomous vehicle to synthesize missing sensor data outside of the field of view of a sensor;
Fig. 6 shows a computer-readable medium comprising data.

It should be noted that the figures are purely diagrammatic and not drawn to scale. In the figures, elements which correspond to elements already described may have the same reference numerals.

## List of reference numbers

[0038] The following list of reference numbers is provided for facilitating the interpretation of the drawings and shall not be construed as limiting the claims.

| | |
|---|---|
| 100 | training system |
| 120 | input-output interface |
| 140 | data storage |
| 142 | generative model data |
| 144 | training data |
| 146 | logging information |
| | |
| 200 | inner iterative loop for training generative part |
| 210 | repeat k iterations |
| 220 | until batch empty |
| | |
| 200 | data synthesis system |
| 220 | input-output interface |
| 240 | data storage |
| 242 | generative model data |

244    synthesized data
300    environment
310    autonomous vehicle
320    image sensor
330    electric motor

400    computer-readable medium
410    non-transitory data

## DETAILED DESCRIPTION

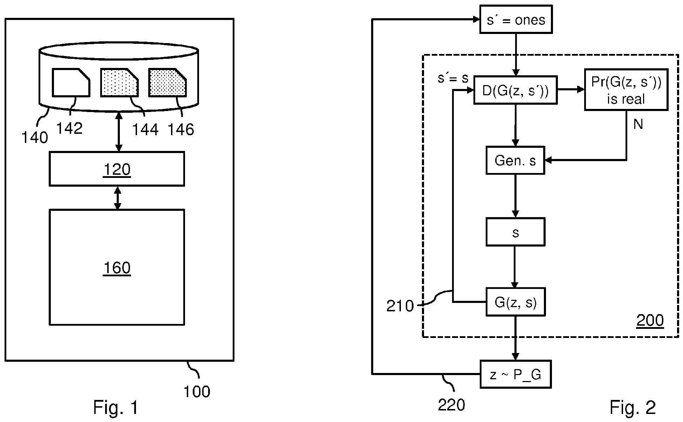

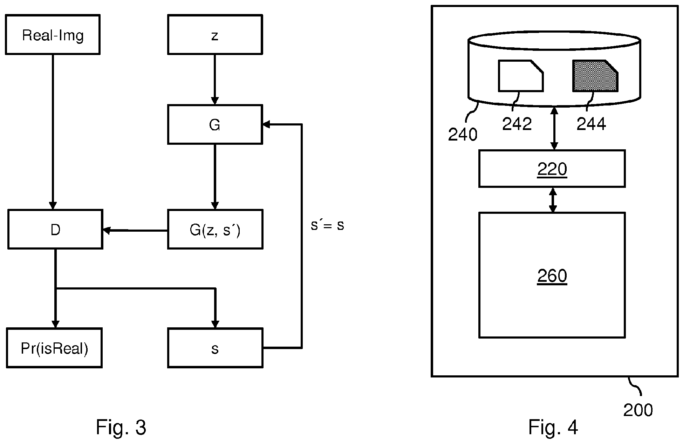

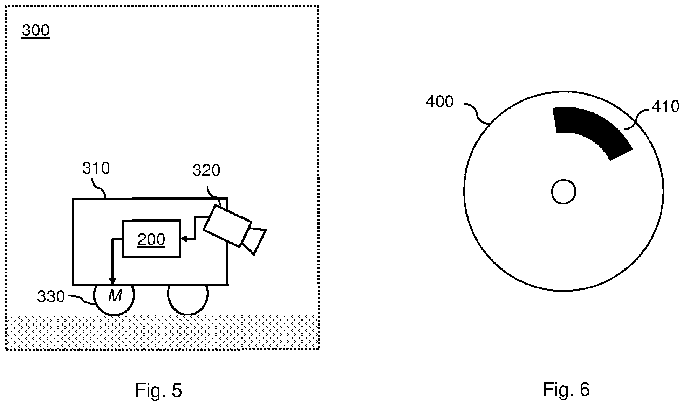

The following relates to training a generative adversarial network (GAN) and using the trained generative adversarial network for data synthesis. Specifically, the training of the GAN is described with reference to Figs. 1-3, while data synthesis using the trained GAN is described with reference to Figs. 4 and 5.

**Fig. 1** shows a training system 100 for training a generative adversarial network. The training system 100 is shown to comprise an input interface 120 configured to access generative model data 142 defining a GAN, which may initially be considered an 'untrained' GAN in that parameters of the GAN may not yet be trained, or at least not yet trained to what may be considered a sufficient degree. The input interface 120 may be further configured to access training data 144 which may comprise a set of training instances for training the GAN, e.g., images, text segments, audio segments or other type of data on which the GAN is to be trained.

As shown in Fig. 1, the input interface 120 may be a data storage interface 120 to a data storage 140 which may comprise said data 142, 144. For example, the input interface 120 may be a memory interface or a persistent storage interface, e.g., an SSD interface, but also a personal, local or wide area network interface such as a Bluetooth, Zigbee or Wi-Fi interface or an ethernet or fibreoptic interface. The data storage 140 may be an internal data storage of the training system 100, but also an external data storage, e.g., a network-connected data storage. The generative model data 142 and the training data 144 may be accessed from different data storages, e.g., using different sub-interfaces of the input interface 120. In other embodiments, the generative model data 142 and the training data 144 may be accessed from a same data storage.

It is noted that the input interface 120 may also be an output interface, e.g., an input-output ('I/O') interface 120. The training system 100 may use the input-output interface 120 to store data, such as (parameters of) the trained GAN and/or logging information 146, as also described elsewhere in this specification.

The GAN as defined by the generative model data 142 may comprise a discriminative part which may be configured to discriminate between input instances originating from the generative part and the training data and to output a classification and an attention mask identifying parts of a respective input instance which contribute to the classification of the respective input instance by the discriminative part, e.g., as originating from the generative part (being 'fake') or as originating from the training data (being 'real'). The GAN as defined by the generative model data 142 may further comprise a generative part which may be configured to receive the attention mask as input and to generate synthesized output instances from i) noisy samples drawn from a latent space and ii) the attention mask.

In the following, the generative part of the GAN is also referred to as generative model or simply as generator or G, and the discriminative part of the GAN is also referred to as discriminative model or simply as discriminator or D.

The training system 100 is further shown to comprise a processor subsystem 160 configured to train the GAN based on the training data 144 in a iterative manner in which the generative part may generate synthesized output instances from noisy samples drawn from a latent space, and in which the discriminative part may be trained to discriminate between input instances originating from the generative part and the training data. In particular, the generative part may be trained to generate synthesized output instances from noisy samples which maximize a discrimination error when the discriminative part is applied to the synthesized output instances. Such training of the discriminative part and the generative part may be iterative, wherein in each iteration, weights of the discriminative part and the generative part may be updated, for example by computing gradients through backpropagation. Such training may be known per se, and may in the following also be referred to as an 'outer iterative loop'.

The processor subsystem 160 may be further configured to establish an inner iterative loop in the iterative training in which parameters of the generative part are trained by iteratively minimizing a loss function for the generative part. This training aspect will be further described with reference to Figs. 2 and 3.

Although not explicitly shown in Fig. 1, the training system 100 may output trained generative model data representing the trained GAN. For example, the generative model data 142 defining the 'untrained' GAN may during or after the training be replaced by the generative model data of the trained GAN, in that parameters of the GAN may be adapted to reflect the training on the training data 144. In other embodiments, the trained generative model data may be stored separately from the generative model data 142 defining the 'untrained' GAN.

In general, the training system 100 may be embodied as, or in, a single device or apparatus, such as a workstation or a server. The server may be an embedded server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the system may be implemented in the device or apparatus in the form of programmable logic, e.g., as a Field-Programmable Gate Array (FPGA). In general, each functional unit of the training system 100 may be implemented in the form of a circuit. The training system 100 may also be implemented in a distributed manner, e.g., involving different devices or apparatuses, such as distributed local or remote, e.g., cloud-based, servers.

The following example describes the training of the GAN in more detail. However, the actual implementation of the training may be carried out in various other ways, e.g., on the basis of analogous mathematical concepts. The following assumes input instances (in short 'inputs') and output instances (in short 'outputs') to be images, but may equally be applied to any other suitable data types.

The training of GANs may be defined by the following objective:

$$\min_G \max_D V(D, G) = \mathbb{E}_{\boldsymbol{x} \sim p_{data}(\boldsymbol{x})}[\log D(\boldsymbol{x})] + \mathbb{E}_{\boldsymbol{z} \sim p_{\boldsymbol{z}}(\boldsymbol{z})}[\log(1 - D(G(\boldsymbol{z})))]$$

where D is the discriminator (e.g., a neural network, such as a convolutional neural network) which determines whether an input is real (i.e., determined to be from data distribution $p_{data}$) or fake (generated by generator G), and G is the generator that maps a latent space (of which z is a sample) to, in this example, an image space. Intuitively, D may be trained to be able to distinguish between real and fake samples, and G may be trained adversarially to try to fool D.

For that purpose, the discriminator D may be configured to output not only the probability that a given sample is real or fake, but also an attention mask, which is in this example an image-based attention mask: a saliency mask s.

$$D \colon \mathbb{R}^{m \times n} \longmapsto \mathbb{R} \times \mathbb{R}^{m \times n}$$

Note that $\mathbb{R}^{m \times n}$ may represent an image input instance reshaped as a data vector of $m \times n$, but may also be $\mathbb{R}^m \times \mathbb{R}^n$ in a more traditional image definition. This saliency mask s may be a function of the parameters of D, as well as of the generated output of the generator G, which in turn may be modelled as a function of z, the latent space vector, and s', a previous saliency mask:

$$s = \phi\big(\theta_D; G(z, s')\big)$$

The generator G may therefore map samples from a latent space as well as a saliency mask to a generated image. Here, k refers to the dimensionality of the latent sample, i.e., the dimensionality of z.

$$G \colon \mathbb{R}^k \times \mathbb{R}^{m \times n} \longmapsto \mathbb{R}^{m \times n}$$

To generate the saliency map, any suitable saliency method may be used, e.g., as explored for deep learning discriminative models [2]. For example, the saliency map s may be a matrix with values in the range [0,1], and may indicate (with values close to 1) which pixels were relevant for D's classification of an input image.

The training objective may be defined with the following loss function:

$$\min_G \max_D V(D, G) = V_{\text{GAN}}(D, G) - \lambda \tilde{I}(s, G^*)$$

In this loss function, D and G are the discriminator D and generator G as described above, $V_{\text{GAN}}(D, G)$ may be a known GAN loss function (which only takes the traditional outputs of D and G but not the saliency mask s into account), $\lambda$ is a regularization term, and $\tilde{I}$ is an approximation of the mutual information between the current saliency mask s and the quantity G*, which is described as follows:

$$G^* = |G(z, s) - G(z, s')|$$

In this formulation, s' may be a previous saliency mask, as will be further explained in the following, but which initially may be a default saliency mask, e.g., a matrix with all 1s, indicating that every pixel is important for classification.

Intuitively, this may be interpreted as the generator G being trained in such a way that the mutual information between the saliency mask produced by D and the proposed changes by G is maximized. The generator may thus specifically look where the discriminator is paying attention and attempts to fool it there.

The value $\tilde{I}$ is an approximation of I, the true mutual information between s and $G^*(z,s)$, and may be derived as follows, following [3]:

$$
\begin{aligned}
I(s; G^*(z, s)) &= \mathbb{E}_{x \sim G(z,s)}\left[\mathbb{E}_{s' \sim P(s|x)}\log P(s'|x)\right] + H(s)\\
&= \mathbb{E}_{s \sim P(s), x \sim G^*(z,s)}\log P(s|x) + H(s)
\end{aligned}
$$

This derivation indicates that a saliency map may be sampled (for which its entropy H(s) is known), the residual G\* computed, and then $P(s|x)$ estimated, which is the likelihood of seeing a saliency s upon having the residual x.

It is noted that [3] use variational arguments to derive a differentiable estimation of P(s|x). Depending on the type of input and output instances, the estimation of $P(s|x)$ may take various forms. For example, in case the input and output instances are images, and both the saliency mask s and the residual G\* are images, $P(s|x)$ may be estimated by any suitable differentiable image similarity measure, which are known per se. In a particularly efficient implementation, P(s|x) may be estimated as a dot product of the saliency mask s and the residual G\*.

When now considering the GAN training in general again, this GAN training typically involves sampling a batch of noise z from the latent space, after which the discriminator D is trained to distinguish the generator's synthetic output G(z) from real input instances from the training data. Then, the generator G is trained on what may be considered an opposite goal, in that a new batch of sampled noise z should be recognized by the current discriminator D's state to be real. It is therefore preferred not to freely pair random input samples z together with the current saliency mask s, as the current saliency mask is a function of the current generator G's state and therefore of z, as stated previously s = $\phi(\theta_D; G(z,s'))$.

A previous attention mask s' may thus be considered to be valid only for the same z. Once a new z is used, an initial attention mask representing equal attention may therefore be used as the previous saliency mask s' in the first iteration of the inner iterative loop and in following iterations be determined by s' = s.

Fig. 2 shows a flowchart illustrating a part of the training of the generative part of the GAN which addresses the above. Herein, the parameters of the generator G are trained by holding z constant, and the discriminator D is used to update the saliency mask s as the discriminator D reacts to the new synthetic output instances generated by the generator G. This may be implemented by introducing an inner iterative loop 200 in the generator training, in which the current z is held constant and new saliency masks are produced as a response to G's synthesized outputs. More specifically, in a current iteration of the inner iterative loop 200, D may be applied to the synthesized output G(z, s'), which is denoted as D(G(z, s')) in Fig. 2, and in which s' is a previous saliency mask (*s' = s*) or in case such a previous saliency mask is unavailable, e.g., at a start of the inner iterative loop 200, an initial saliency mask such as a saliency mask consisting of all ones (s' = ones). If the synthesized output G(z, s') is judged to be fake by the discriminator D, which is denoted in Fig. 2 as a negative outcome of *'Pr(G(z, s')) is real'*, a saliency mask s may be generated (*Gen s*) which may be used by the generator G to generate synthesized output (*G(z, s)*), after which the inner iterative loop may be repeated, e.g., for k iterations, as shown by arrow 210. Upon completion of the inner iterative loop 200, a new latent vector z may be obtained and the inner iterative loop may be repeated, as shown by arrow 220, for example until the batch of latent vectors z is empty or another type of end-criterion has been reached.

Fig. 3 shows an alternate view of the training of the generative part G of the generative adversarial network. Here, the discriminator D is shown to be applied to real input instances, being in this case images (*Real-Img*), and to synthetic images which are generated by generator G from noisy samples z and a previous saliency mask s' (*G(z, s')*). If the discriminator D judges an image not to be real, a current saliency mask s is output which is then used by the generator G in a next iteration, being in that iteration again a preceding saliency mask (*s' = s*).

Note that Figs. 2 and 3 may suggest that an attention mask is only generated by the discriminative part if the input instance is judged as fake. However, the discriminative part may also be configured to, if the input instance is judged as real, to produce an empty saliency mask indicating that there is nothing in the image that the generative part should change. Furthermore, it will be appreciated that in practice, the output of Pr(G(z, s')) may be real, e.g., a floating point value between 0 and 1, and not a binary 0 or 1. In such a case, the saliency mask may seldomly be completely empty, and the saliency map may be generated via backpropagation of the output of Pr(G(z, s')) to the input, i.e., the derivative of the output of Pr(G(z, s')) with respect to the derivative of the input.

Fig. 4 shows a data synthesis system 200 for synthesizing data using a generative part of a trained generative adversarial network. The data synthesis system 200 is shown to comprise an input interface 220 configured to access generative model data 242 defining at least the generative part (G) of a GAN which is trained by the training system 100 as described with reference to Figs. 1-3 and elsewhere. Fig. 4 shows the generative model data 242 being accessed from a data storage 240. In some embodiments, the generative model data 242 may include also the discriminative part (D), while in other embodiments, the generative model data 242 may omit the discriminative part to instead only include the generative part.

It is noted that the same implementation options may apply to the input interface 220 and the data storage 240 as previously as described for respectively the input interface 120 and the data storage 140 of the training system 100 of Fig. 1.

The data synthesis system 200 is further shown to comprise a processor subsystem 260 which may be configured to use the generative part of the GAN to generate one or more synthesized output instances from noisy samples z drawn from a latent space. In doing so, an attention mask may be used which identifies all parts of a respective input instance equally, e.g., a saliency mask consisting of all ones in cases the GAN is trained to generate images.

The data synthesis system 200 may further comprise an output interface configured to output the synthesized output instances as synthesized data 244. In the example of Fig. 4, the input interface is an input-output ('I/O') interface, which thereby may also embody the output interface, and via which the synthesized data 244 may be stored in the data storage 240. However, the output interface may also be separate from the input interface and may be of a different type. In general, the same implementation options may apply to the output interface 220 as previously as described for the input interface 120 of the training system 100 of Fig. 1.

In general, the data synthesis system 200 may be embodied as, or in, a single device or apparatus, such as a workstation or a server. The server may be an embedded server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the system may be implemented in the device or apparatus in the form of programmable logic, e.g., as a Field-Programmable Gate Array (FPGA). In general, each functional unit of the data synthesis system 200 may be implemented in the form of a circuit. The system 200 may also be implemented in a distributed manner, e.g., involving different devices or apparatuses, such as distributed local or remote, e.g., cloud-based, servers.

**Fig. 5** shows the data synthesis system 200 being used in an autonomous vehicle 310 which operates in an environment 300 to synthesize missing sensor data outside of the field of view of an image sensor 320. Based on the sensor data and the synthesized data, an electric motor 330 may be controlled. In general, such a data synthesis system may be (part of) a physical entity such as a vehicle, robot, etc., or a connected or distributed system of physical entities, e.g., a lighting system, or any other type of physical system, e.g., a building.

Any method described in this specification may be implemented on a computer as a computer implemented method, as dedicated hardware, or as a combination of both. As also illustrated in **Fig. 6,** instructions for the computer, e.g., executable code, may be stored on a computer readable medium 400, e.g., in the form of a series 410 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 6 shows an optical disc 400. In an alternative embodiment of the computer readable medium 400, the computer readable medium 400 may comprise transitory or non-transitory data 410 representing a trained GAN as described elsewhere in this specification.

Examples, embodiments or optional features, whether indicated as nonlimiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer.

**Claims**

**1.** A training system (100) for training a generative adversarial network, the training system comprising:

- an input interface (120) configured to access:
- training data (144) for the generative adversarial network, wherein the training data (144) comprises training images

- generative model data (142) defining a generative adversarial network comprising a generative part (G) and a discriminative part (D), wherein the generative part (G) is configured to generate synthetic output images and the discriminative part (D) is configured to discriminate between input images originating from the generative part (G) and the training data (144),

wherein the discriminative part (D) is configured to output a classification and an attention mask (s) identifying parts of an input image which contribute to the classification of the respective input image by the discriminative part (D),

wherein the generative part (G) is configured to receive the attention mask (s) as input and to generate synthesized output images from i) noisy samples (z) drawn from a latent space and ii) the attention mask (s); and

- a processor subsystem (160) configured to iteratively train the generative adversarial network based on the training data by establishing an inner iterative loop (200) in the iterative training in which parameters of the generative part (G) are trained by iteratively minimizing a loss function for the generative part (G), wherein minimizing the loss function comprises maximizing a mutual information term included in the loss function which represents mutual information between:

- a current attention mask (s) of the discriminative part (D), wherein the current attention mask (s) is obtained from the discriminative part (D) by classification of a previous synthesized output image of the generative part (G) which is generated using a previous attention mask (s') obtained from the discriminative part (D) in a previous iteration of the inner iterative loop, and

- changes between a current synthesized output image of the generative part (G) which is generated using the current attention mask (s) and the previous synthesized output instance of the generative part (G).

2. The training system (100) according to claim 1, wherein the processor subsystem (160) is configured to hold the noisy samples (z) which are used as input to the generative part (G) constant in the inner iterative loop of the iterative training.

3. The training system (100) according to claim 1 or 2, wherein the processor subsystem (160) is configured to use an initial attention mask (s') as the previous attention mask at a start of the inner iterative loop, wherein the initial attention mask (s') identifies all parts of a respective input image equally.

4. The training system (100) according to any one of claims 1 to 3, wherein the mutual information term is an approximation of the true mutual information between the current attention mask (s) and the changes in the synthesized output images.

5. The training system (100) according to claim 4, wherein the mutual information term is lower bounded by Variational Information Maximization.

6. The training system (100) according to any one of claims 1 to 4, wherein the discriminative part (D) is configured to generate the attention mask as a spatial overlay to the synthesized output image which is used as input to the discriminative part (D).

7. The training system (100) according to any one of claims 1 to 6, further comprising an output interface (120) configured to output logging information (146) which at least in part characterizes the training of the generative adversarial network.

8. The training system (100) according to claim 7, wherein the processor subsystem (160) is configured to output one or more attention masks generated in the inner iterative loop of the training as, or as part of, the logging information (146).

9. The training system (100) according to claim 7 or 8, wherein the processor subsystem (160) is configured to store the logging information (146) as metadata to the generative model data (142) defining the trained generative adversarial model.

10. A computer-implemented method for training a generative adversarial network, the method comprising:

- accessing:
- training data (144) for the generative adversarial network, wherein the training data (144) comprises training images
- generative model data defining a generative adversarial network comprising a generative part (G) and a discriminative part (D), wherein the generative part (G) is configured to generate synthetic output images and the discriminative part (D) is configured to discriminate between input images originating from the generative part (G) and the training data (144),

wherein the discriminative part (D) is configured to output a classification and an attention mask (s) identifying parts of a respective input image which contribute to the classification of the respective input image by the discriminative part (D),
wherein the generative part (G) is configured to receive the attention mask (s) as input and to generate synthesized output images from i) noisy samples (z) drawn from a latent space and ii) the attention mask (s); and

- iteratively training the generative adversarial network based on the training data by establishing an inner iterative loop in the iterative training in which the generative part (G) is trained using the discriminative part (D) by iteratively minimizing a loss function for the generative part (G), wherein minimizing the loss function comprises maximizing a mutual information term included in the loss function which represents mutual information between:
- a current attention mask (s) of the discriminative part (D), wherein the current attention mask (s) is obtained from the discriminative part (D) by classification of a previous synthesized output image of the generative part (G) which is generated using a previous attention mask (s') obtained from the discriminative part (D) in a previous iteration of the inner iterative loop, and
- changes between a current synthesized output image of the generative part (G) which is generated using the current attention mask (s) and the previous synthesized output image of the generative part (G).

11. The computer-implemented method of claim 10, further comprising:

- using the generative part (G) of the generative adversarial network to generate one or more synthesized output images from noisy samples (z) drawn from a latent space; and
- outputting the one or more synthesized output images as synthesized data.

12. A computer-readable medium (400) comprising transitory or non-transitory data (410) representing instructions which, when executed by a processor system, are arranged to cause the processor system to perform the computer-implemented method according to claim 10 or 11.

## Patentansprüche

1. Trainingssystem (100) zum Trainieren eines generativen gegnerischen Netzwerks, das Trainingssystem umfassend:

- eine Eingabeschnittstelle (120), die konfiguriert ist, um auf Folgendes zuzugreifen:
- Trainingsdaten (144) für das generative gegnerische Netzwerk, wobei die Trainingsdaten (144) Trainingsbilder umfassen,
- generative Modelldaten (142), die ein generatives gegnerisches Netzwerk definieren, das einen generativen Teil (G) und einen diskriminativen Teil (D) umfasst, wobei der generative Teil (G) konfiguriert ist, um synthetische Ausgabebilder zu erzeugen, und der diskriminative Teil (D) konfiguriert ist, um zwischen Eingabebildern zu unterscheiden, die aus dem generativen Teil (G) und den Trainingsdaten (144) stammen,

wobei der diskriminative Teil (D) konfiguriert ist, um eine Klassifizierung und eine Attention Mask (s) auszugeben, die Teile eines Eingabebilds identifizieren, die zur Klassifizierung des jeweiligen Eingabebilds durch den diskriminativen Teil (D) beitragen,
wobei der generative Teil (G) konfiguriert ist, um die Attention Mask (s) als Eingabe zu empfangen und synthetisierte Ausgabebilder aus i) verrauschten Proben (z), die aus einem latenten Raum gewonnen wurden, und ii) der Attention Mask (s) zu erzeugen; und

- ein Prozessorsubsystem (160), das konfiguriert ist, um das generative gegnerische Netzwerk basierend auf Trainingsdaten iterativ zu trainieren, indem es eine innere iterative Schleife (200) während des iterativen Trainings einrichtet, bei dem Parameter des generativen Teils (G) durch iteratives Minimieren einer Verlustfunktion für den generativen Teil (G) trainiert werden, wobei das Minimieren der Verlustfunktion das Maximieren eines in der Verlustfunktion enthaltenen gegenseitigen Informationsterms umfasst, der gegenseitige Informationen zwischen Folgendem darstellt:
- einer aktuellen Attention Mask (s) des diskriminativen Teils (D), wobei die aktuelle Attention Mask (s) aus dem diskriminativen Teil (D) durch Klassifizierung eines vorherigen synthetisierten Ausgabebilds des generativen Teils (G) erhalten wird, das unter Verwendung einer vorherigen Attention Mask (s') erzeugt wird, die aus dem diskriminativen Teil (D) in einer vorherigen Iteration der inneren iterativen Schleife erhalten wurde, und
- Änderungen zwischen einem aktuellen synthetisierten Ausgabebild des generativen Teils (G), das unter Verwendung der aktuellen Attention Mask (s) erzeugt wird, und der vorherigen synthetisierten Ausgabeinstanz des generativen Teils (G).

2. Trainingssystem (100) nach Anspruch 1, wobei das Prozessorsubsystem (160) konfiguriert ist, um die verrauschten Proben (z), die als Eingabe für den generativen Teil (G) verwendet werden, konstant in der inneren iterativen Schleife des iterativen Trainings zu halten.

3. Trainingssystem (100) nach Anspruch 1 oder 2, wobei das Prozessorsubsystem (160) konfiguriert ist, um zu Beginn der inneren iterativen Schleife eine anfängliche Attention Mask (s') als vorherige Attention Mask zu verwenden, wobei die anfängliche Attention Mask (s') alle Teile eines jeweiligen Eingabebildes gleichermaßen identifiziert.

4. Trainingssystem (100) nach einem der Ansprüche 1 bis 3, wobei der gegenseitige Informationsterm eine Annäherung an die echte gegenseitige Information zwischen der aktuellen Attention Mask (s) und den Änderungen in den synthetisierten Ausgabebildern ist.

5. Trainingssystem (100) nach Anspruch 4, wobei der gegenseitige Informationsterm durch Variational Information Maximization nach unten beschränkt ist.

6. Trainingssystem (100) nach einem der Ansprüche 1 bis 4, wobei der diskriminative Teil (D) konfiguriert ist, um die Attention Mask als räumliche Überlagerung des synthetisierten Ausgabebildes zu erzeugen, das als Eingabe für den diskriminativen Teil (D) verwendet wird.

7. Trainingssystem (100) nach einem der Ansprüche 1 bis 6, ferner umfassend eine Ausgabeschnittstelle (120), die konfiguriert ist, um eine Protokollinformation (146) auszugeben, die das Training des generativen gegnerischen Netzwerks zumindest teilweise charakterisiert.

8. Trainingssystem (100) nach Anspruch 7, wobei das Prozessorsubsystem (160) konfiguriert ist, um eine oder mehrere Attention Masks auszugeben, die in der inneren iterativen Schleife des Trainings als die Protokollinformation (146) oder als Teil davon erzeugt wurden.

9. Trainingssystem (100) nach Anspruch 7 oder 8, wobei das Prozessorsubsystem (160) konfiguriert ist, um die Protokollinformation (146) als Metadaten zu den generativen Modelldaten (142) zu speichern, die das trainierte generative gegnerische Modell definieren.

10. Computerimplementiertes Verfahren zum Trainieren eines generativen gegnerischen Netzwerks, das Verfahren umfassend:

   - Zugreifen auf:
   - Trainingsdaten (144) für das generative gegnerische Netzwerk, wobei die Trainingsdaten (144) Trainingsbilder umfassen,
   - generative Modelldaten, die ein generatives gegnerisches Netzwerk definieren, das einen generativen Teil (G) und einen diskriminativen Teil (D) umfasst, wobei der generative Teil (G) konfiguriert ist, um synthetische Ausgabebilder zu erzeugen, und der diskriminative Teil (D) konfiguriert ist, um zwischen Eingabebildern zu unterscheiden, die aus dem generativen Teil (G) und den Trainingsdaten (144) stammen,

      wobei der diskriminative Teil (D) konfiguriert ist, um eine Klassifizierung und eine Attention Mask (s) auszugeben, die Teile eines jeweiligen Eingabebilds identifizieren, die zur Klassifizierung des jeweiligen Eingabebilds durch den diskriminativen Teil (D) beitragen,
      wobei der generative Teil (G) konfiguriert ist, um die Attention Mask (s) als Eingabe zu empfangen und synthetisierte Ausgabebilder aus i) verrauschten Proben (z), die aus einem latenten Raum gewonnen wurden, und ii) der Attention Mask (s) zu erzeugen; und

- iteratives Trainieren des generativen gegnerischen Netzwerks basierend auf Trainingsdaten durch Einrichten einer inneren iterativen Schleife während des iterativen Trainings, bei dem der generative Teil (G) unter Verwendung des diskriminativen Teils (D) durch iteratives Minimieren einer Verlustfunktion für den generativen Teil (G) trainiert wird, wobei das Minimieren der Verlustfunktion das Maximieren eines in der Verlustfunktion enthaltenen gegenseitigen Informationsterms umfasst, der gegenseitige Informationen zwischen Folgendem darstellt:

- einer aktuellen Attention Mask (s) des diskriminativen Teils (D), wobei die aktuelle Attention Mask (s) aus dem diskriminativen Teil (D) durch Klassifizierung eines vorherigen synthetisierten Ausgabebilds des generativen Teils (G) erhalten wird, das unter Verwendung einer vorherigen Attention Mask (s') erzeugt wird, die aus dem diskriminativen Teil (D) in einer vorherigen Iteration der inneren iterativen Schleife erhalten wurde, und
- Änderungen zwischen einem aktuellen synthetisierten Ausgabebild des generativen Teils (G), das unter Verwendung der aktuellen Attention Mask (s) erzeugt wird, und des vorherigen synthetisierten Ausgabebilds des generativen Teils (G).

11. Computerimplementiertes Verfahren nach Anspruch 10, ferner umfassend:

- Verwenden des generativen Teils (G) des generativen gegnerischen Netzwerks zum Erzeugen eines oder mehrerer synthetisierter Ausgabebilder aus verrauschten Proben (z), die aus einem latenten Raum gewonnen wurden; und
- Ausgeben des einen oder mehreren synthetisierten Ausgabebilder als synthetisierte Daten.

12. Computerlesbares Medium (400), das flüchtige oder nichtflüchtige Daten (410) umfasst, die Anweisungen darstellen, die bei Ausführung durch ein Prozessorsystem dazu angeordnet sind, das Prozessorsystem zu veranlassen, das computerimplementierte Verfahren nach Anspruch 10 oder 11 durchzuführen.

**Revendications**

1. Système d'apprentissage (100) pour l'apprentissage d'un réseau antagoniste génératif, le système d'apprentissage comprenant :

- une interface d'entrée (120) configurée pour accéder :
- à des données d'apprentissage (144) pour le réseau antagoniste génératif, les données d'apprentissage (144) comprenant des images d'apprentissage
- des données de modèle génératif (142) définissant un réseau antagoniste génératif comprenant une partie générative (G) et une partie discriminante (D), la partie générative (G) étant configurée pour générer des images de sortie synthétiques et la partie discriminante (D) étant configurée pour faire la distinction entre les images d'entrée provenant de la partie générative (G) et les données d'apprentissage (144),

la partie discriminante (D) étant configurée pour produire une classification et un masque d'attention (s) identifiant les parties d'une image d'entrée qui contribuent à la classification de l'image d'entrée respective par la partie discriminante (D),
la partie générative (G) étant configurée pour recevoir le masque d'attention (s) en tant qu'entrée et pour générer des images de sortie synthétisées à partir i) d'échantillons bruités (z) tirés d'un espace latent et ii) du masque d'attention (s) ; et

- un sous-système de processeur (160) configuré pour entraîner de manière itérative le réseau antagoniste génératif sur la base des données d'apprentissage en établissant une boucle itérative interne (200) dans l'apprentissage itératif dans lequel les paramètres de la partie générative (G) sont entraînés en minimisant de manière itérative une fonction de perte pour la partie générative (G), où la minimisation de la fonction de perte comprend la maximisation d'un terme d'information mutuelle inclus dans la fonction de perte qui représente l'information mutuelle entre :
- un masque d'attention courant (s) de la partie discriminante (D), où le masque d'attention courant (s) est obtenu à partir de la partie discriminante (D) par classification d'une image de sortie synthétisée précédente de la partie générative (G) qui est générée à l'aide d'un masque d'attention précédent (s') obtenu à partir de la partie discriminante (D) lors d'une itération précédente de la boucle itérative interne, et
- les changements entre une image de sortie synthétisée courante de la partie générative (G) qui est générée en utilisant le masque d'attention courant (s) et l'instance de sortie synthétisée précédente de la partie générative (G).

2. Système d'apprentissage (100) selon la revendication 1, dans lequel le sous-système de processeur (160) est configuré pour maintenir constants les échantillons bruyants (z) qui sont utilisés comme entrée dans la partie générative (G) dans la boucle itérative interne de l'apprentissage itératif.

3. Système d'apprentissage (100) selon la revendication 1 ou la revendication 2, dans lequel le sous-système de processeur (160) est configuré pour utiliser un masque d'attention initial (s') comme masque d'attention précédent au début de la boucle itérative interne, où le masque d'attention initial (s') identifie toutes les parties d'une image d'entrée respective de manière égale.

4. Système d'apprentissage (100) selon l'une quelconque des revendications 1 à 3, dans lequel le terme d'information mutuelle est une approximation de la véritable information mutuelle entre le masque d'attention courant (s) et les changements dans les images de sortie synthétisées.

5. Système d'apprentissage (100) selon la revendication 4, dans lequel le terme d'information mutuelle est limité par la maximisation de l'information varia-tionnelle.

6. Système d'apprentissage (100) selon l'une quelconque des revendications 1 à 4, dans lequel la partie discriminante (D) est configurée pour générer le masque d'attention en tant que superposition spatiale à l'image de sortie synthétisée qui est utilisée comme entrée dans la partie discriminante (D).

7. Système d'apprentissage (100) selon l'une quelconque des revendications 1 à 6, comprenant en outre une interface de sortie (120) configurée pour délivrer en sortie des informations de journalisation (146) qui caractérisent au moins en partie l'apprentissage du réseau antagoniste génératif.

8. Système d'apprentissage (100) selon la revendication 7, dans lequel le sous-système de processeur (160) est configuré pour délivrer en sortie un ou plusieurs masques d'attention générés dans la boucle itérative interne de l'apprentissage en tant que, ou en tant que partie des, informations de journalisation (146).

9. Système d'apprentissage (100) selon la revendication 7 ou la revendication 8, dans lequel le sous-système de processeur (160) est configuré pour stocker les informations de journalisation (146) en tant que métadonnées des données de modèle génératif (142) définissant le modèle antagoniste génératif ayant fait l'objet d'un apprentissage.

10. Procédé mis en oeuvre par ordinateur destiné à l'apprentissage d'un réseau antagoniste génératif, le procédé comprenant les étapes suivantes :

- accéder :
- à des données d'apprentissage (144) pour le réseau antagoniste génératif, les données d'apprentissage (144) comprenant des images d'apprentissage,
- à des données de modèle génératif définissant un réseau antagoniste génératif comprenant une partie générative (G) et une partie discriminante (D), la partie générative (G) étant configurée pour générer des images de sortie synthétiques et la partie discriminante (D) étant configurée pour faire la distinction entre les images d'entrée provenant de la partie générative (G) et les données d'apprentissage (144),

la partie discriminante (D) étant configurée pour produire une classification et un masque d'attention (s) identifiant les parties d'une image d'entrée respective qui contribuent à la classification de l'image d'entrée respective par la partie discriminante (D),
la partie générative (G) étant configurée pour recevoir le masque d'attention (s) en tant qu'entrée et pour générer des images de sortie synthétisées à partir i) d'échantillons bruités (z) tirés d'un espace latent et ii) du masque d'attention (s) ; et

- entraîner de manière itérative le réseau antagoniste génératif sur la base des données d'apprentissage en établissant une boucle itérative interne dans l'apprentissage itératif où la partie générative (G) est formée à l'aide de la partie discriminante (D) en minimisant de manière itérative une fonction de perte pour la partie générative (G), où la minimisation de la fonction de perte comprend la maximisation d'un terme d'information mutuelle inclus dans la fonction de perte qui représente l'information mutuelle entre :
- un masque d'attention courant (s) de la partie discriminante (D), où le masque d'attention courant (s) est obtenu à partir de la partie discriminante (D) par classification d'une image de sortie synthétisée précédente de la partie générative (G) qui est générée à l'aide d'un masque d'attention précédent (s') obtenu à partir de la partie discriminante (D) lors d'une itération précédente de la boucle itérative interne, et
- les changements entre une image de sortie synthétisée courante de la partie générative (G) qui est générée en utilisant le masque d'attention courant (s) et l'image de sortie synthétisée précédente de la partie générative (G).

11. Procédé mis en oeuvre par ordinateur selon la revendication 10, le procédé comprenant en outre les étapes suivantes :

    - utiliser la partie générative (G) du réseau antagoniste génératif pour générer une ou plusieurs images de sortie synthétisées à partir d'échantillons bruyants (z) tirés d'un espace latent ; et
    - délivrer en sortie les une ou plusieurs images de sortie synthétisées en tant que données synthétisées.

12. Support lisible par ordinateur (400) comprenant des données transitoires ou non transitoires (410) représentant des instructions qui, lorsqu'elles sont exécutées par un système de processeur, sont agencées pour amener le système de processeur à exécuter le procédé mis en oeuvre par ordinateur selon la revendication 10 ou la revendication 11.

Fig. 1

Fig. 2

Real-Img

z

G

D ← G(z, s´)

s´= s

Pr(isReal)

s

Fig. 3

240

242

244

220

260

200

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Attention-Guided Generative Adversarial Networks for Unsupervised Image-to-Image Translation. **HAO TANG et al.** ARXIV.ORG. CORNELL UNIVERSITY LIBRARY, 201 OLIN LIBRARY CORNELL UNIVERSITY, 28 March 2019
- **XI CHEN et al.** InfoGAN: Interpretable Representation Learning by Information Maximizing Generative Adversarial Nets. *Proceedings of the 30th International Conference on Neural Information Processing Systems (NIPS 2016)*, 05 December 2016, 2180-2188

- **IAN J. GOODFELLOW et al.** Generative Adversarial Networks. *NIPS 2014*, 2672-2680, https://arxiv.org/abs/1406.2661
- **JULIUS ADEBAYO et al.** *Sanity Checks for Saliency Maps*, https://arxiv.org/abs/1810.03292
- **XI CHEN et al.** *InfoGAN: Interpretable Representation Learning by Information Maximizing Generative Adversarial Nets*, https://arxiv.org/abs/1606.03657